# FASCICULE DE BREVET EUROPEEN

(11) **EP 1 181 640 B1**
(45) Date de publication et mention de la délivrance du brevet: **29.01.2003**
(21) Numéro de dépôt: 00936980.2
(22) Date de dépôt: 30.05.2000
(51) Int. Cl.: G06F 9/44, G06F 3/033, H04M 1/247

(54) **DISPOSITIF D'INTERFACAGE HOMME/MACHINE ADAPTATIF**
ADAPTIVE SCHNITTSTELLENANORDNUNG ZWISCHEN MENSCH UND MASCHINE
ADAPTIVE MAN/MACHINE INTERFACE

(30) Priorité: 31.05.1999 FR 9906834
(43) Date de publication de la demande: 27.02.2002
(73) Titulaire: FRANCE TELECOM, 75015 Paris (FR)
(72) Inventeur: CALVEZ, Serge, F-22307 Lannion Cedex (FR)
(74) Mandataire: Loisel, Bertrand
(86) Numéro de dépôt international: FR0001481
(87) Numéro de publication internationale: WO00073899

(56) Documents cités:
- EP-A- 0 367 709
- EP-A- 0 794 647
- EP-A- 0 891 066
- US-A- 5 201 034
- US-A- 5 726 688
- "REORGANIZATION MENU HIERARCHY TO BEST FIT THE INDIVIDUAL USER" IBM TECHNICAL DISCLOSURE BULLETIN,US,IBM CORP. NEW YORK, vol. 37, no. 2B, 1 février 1994 (1994-02-01), pages 349-350, XP000433874 ISSN: 0018-8689
- KAWACHIYA K ET AL: "NAVIPOINT: AN INPUT DEVICE FOR MOBILE INFORMATION BROWSING" CHI CONFERENCE PROCEEDINGS. HUMAN FACTORS IN COMPUTING SYSTEMS,US,NEW YORK, NY: ACM, 1998, pages 1-8, XP000780768 ISBN: 0-89791-975-0

## Description

L'invention concerne un dispositif d'interfaçage homme/machine adaptatif, ci-après désigné IHM.

La multiplication des matériels électroniques et/ou informatiques disposant d'un menu de configuration ou de programmation conduit, le plus souvent, l'utilisateur à une sous-utilisation, voire à une mauvaise utilisation des matériels, en raison de la complexité des fonctions susceptibles d'être mises en oeuvre.

En particulier, la recherche d'ergonomie visant à palier l'absence de lecture des divers modes d'emploi achoppe bien souvent sur la complexité des menus et sur la multiplicité des touches permettant l'exécution de telles fonctions.

Un apprentissage empirique, dépendant en fait de l'agilité ou de la dextérité de l'utilisateur, est alors effectué tant bien que mal par ce dernier au moyen de biais allant de la redondance dans la manipulation, redondance telle qu'une réitération de l'opération pour s'assurer d'une bonne manipulation, à la complication de procédure, actionnement de plusieurs touches pour l'obtention d'un résultat accessible par une touche directe.

Afin de tenter de résoudre de telles difficultés, différentes solutions ont été proposées. Parmi celles-ci, dans le cadre d'équipements téléphoniques à écran dotés de fonctions multiples proposées en menus arborescents, un système d'interfaçage IHM a été proposé et décrit par la demande de brevet européen EP 0 794 647 publiée le 10/09/1997.

Un tel système met en oeuvre une quantification du nombre de sélections réussies par l'utilisateur, et du nombre d'échecs, avec prise en compte possible de l'agilité de sélection, au cours de l'utilisation.

Un tel système IHM présente de lourdes contraintes, telles qu'un délai non négligeable d'apprentissage du comportement de l'utilisateur, et, suite à cet apprentissage, une quasi-impossibilité d'interchangeabilité entre utilisateurs parmi un groupe d'utilisateurs.

La présente invention a pour objet de remédier aux inconvénients précités des systèmes IHM de l'art antérieur.

En particulier un objet de la présente invention est la mise en oeuvre d'un dispositif IHM, lequel, bien que d'utilisation simple, présente une efficacité maximum.

Un autre objet de la présente invention est la mise en oeuvre d'un dispositif IHM adaptable à tout type de machine d'état et à tout type de fonctions gérées par ces machines d'état.

Un autre objet de la présente invention est également la mise en oeuvre d'un dispositif IHM adaptatif en fonction du niveau de connaissances ou profil utilisateur.

Un autre objet de la présente invention est enfin la mise en oeuvre d'un dispositif IHM adaptatif d'une grande souplesse d'utilisation, le caractère adaptatif de ce dispositif IHM permettant la prise en compte de la rapidité de navigation de l'utilisateur sur cette interface, afin d'accélérer le processus de sélection des différentes fonctions gérées par ce dispositif IHM.

Le dispositif d'interfaçage homme/machine, objet de l'invention, cette machine étant constituée par une machine d'état configurable dans laquelle une pluralité d'états fonctionnels sont susceptibles d'être configurés par un utilisateur par dialogue interactif, est remarquable en ce qu'il comporte au moins un module de discrimination du degré de connaissance de cette machine par cet utilisateur et un module d'interfaçage visuel permettant d'afficher une pluralité de niveaux d'états fonctionnels de cette machine. Un module adaptatif de sélection, par l'utilisateur, de niveaux d'états fonctionnels successifs et d'états fonctionnels déterminés parmi ces niveaux d'états fonctionnels est prévu. Le module adaptatif de sélection permet une présentation sélective et un choix sélectif des niveaux d'états fonctionnels successifs à l'utilisateur et une sélection d'états fonctionnels déterminés parmi chacun des niveaux d'états fonctionnels par cet utilisateur par l'intermédiaire du module d'interfaçage visuel, en fonction du degré de connaissance discriminé de cette machine d'état par cet utilisateur. La sélection de niveaux d'états fonctionnels successifs et d'états fonctionnels déterminés parmi ces niveaux d'états fonctionnels successifs permet à l'utilisateur d'établir une configuration courante pour la machine d'état. Un module de calcul permet, d'une part, la conduite du dialogue interactif et la mémorisation et la transmission à la machine d'état de la configuration courante d'autre part.

Le dispositif IHM objet de le présente invention trouve application à la gestion de toute machine d'état telle que, notamment, terminal téléphonique, autoradio, pavé de commande TV, micro-ordinateur et plus généralement à tout système de commande séquentielle d'une machine d'état.

Il sera mieux compris à la lecture de la description et à l'observation des dessins ci-après dans lesquels :
- la figure 1 représente, sous forme de schéma synoptique, un descriptif IHM conforme à l'objet de la présente invention ;
- la figure 2a représente, à titre d'exemple non limitatif, un mode de réalisation préférentiel du module de discrimination du degré de connaissances de la machine par l'utilisateur ;
- la figure 2b représente, à titre d'exemple non limitatif, une variante de réalisation du module de discrimination représenté en figure 2a ;
- la figure 3 représente, à titre d'exemple non limitatif, une premier mode de réalisation particulier du module adaptatif de sélection par l'utilisateur de niveaux d'états fonctionnels successifs à partir d'un navigateur multidirectionnel ;
- les figures 4a et 4b représentent, à titre d'exemple non limitatif, un premier mode de réalisation, selon la figure 3, du module adaptatif de sélection de niveaux successifs appliqué à un terminal téléphonique pour un premier degré de connaissances, novice, de la machine d'état par l'utilisateur ;
- les figures 4c et 4d représentent, à titre d'exemple non limitatif, un premier mode de réalisation, selon la figure 3, du module adaptatif de sélection de niveaux successifs appliqué à un terminal téléphonique pour un deuxième degré de connaissances, habitué, de la machine d'état par l'utilisateur ;
- les figures 4e et 4f représentent, à titre d'exemple non limitatif, un premier mode de réalisation, selon la figure 3, du module adaptatif de sélection de niveaux successifs appliqué à un terminal téléphonique pour un troisième degré de connaissances, expert, de la machine d'état par l'utilisateur ;
- la figure 5 représente, à titre d'exemple non limitatif, un deuxième mode de réalisation du module adaptatif de sélection de niveaux d'états fonctionnels successifs à partir d'un écran tactile ;
- les figures 6a et 6b représentent, à titre d'exemple non limitatif, un deuxième mode de réalisation, selon la figure 5, du module adaptatif de sélection de niveaux successifs appliqué à un autoradio pour un premier degré de connaissances, novice, de la machine d'état par l'utilisateur ;
- les figures 6c et 6d représentent, à titre d'exemple non limitatif, un deuxième mode de réalisation, selon la figure 5, du module de sélection de niveaux successifs appliqué à un autoradio pour un deuxième degré de connaissances, habitué, de la machine d'état par l'utilisateur ;
- les figures 6e et 6f représentent, à titre d'exemple non limitatif, un deuxième mode de réalisation, selon la figure 5, du module de sélection de niveaux successifs appliqué à un autoradio pour un troisième degré de connaissances, expert, de la machine d'état par l'utilisateur ;

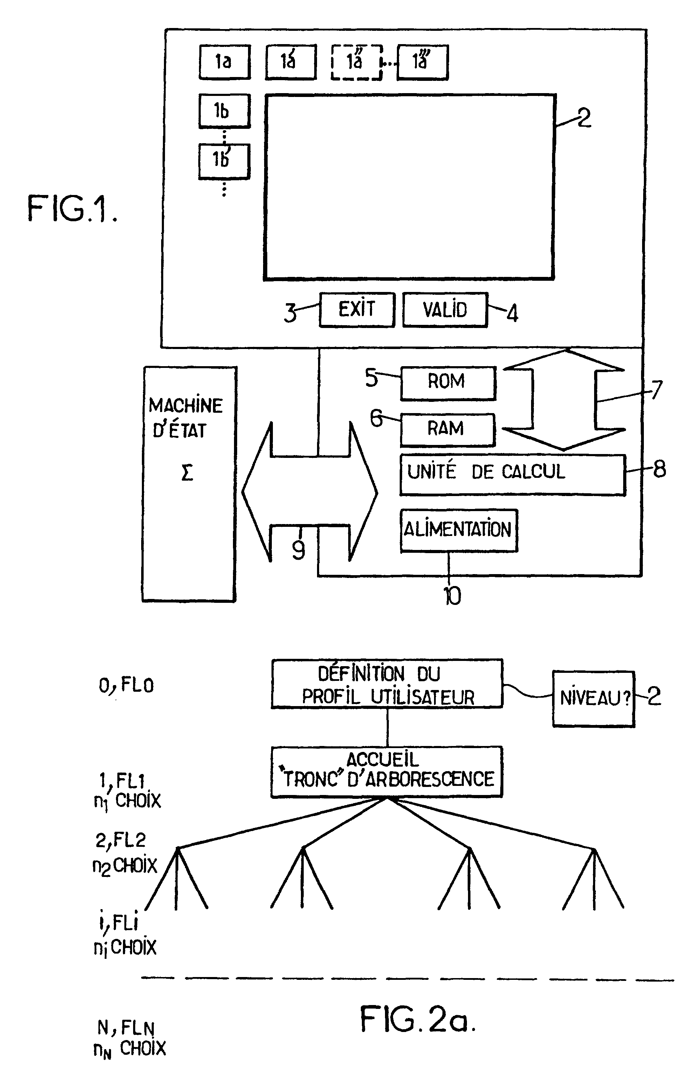

Une description plus détaillée d'un dispositif d'interfaçage homme/machine objet de la présente invention sera maintenant donnée en liaison avec la figure 1 et les figures suivantes.

D'une manière générale, on indique que la machine susceptible d'accueillir un dispositif d'interfaçage homme/machine objet de la présente invention peut être constituée par toute machine d'état configurable, dans laquelle une pluralité d'états fonctionnels sont susceptibles d'être configurés par un utilisateur par l'intermédiaire d'un dialogue interactif. Ainsi, par machine d'état, on entend toute machine électronique ou informatique telles que notamment un terminal téléphonique, un autoradio, un boîtier de télécommande de téléviseur et un micro-ordinateur, pour lesquels un logiciel désigné par "système d'exploitation" est nécessaire afin de permettre le fonctionnement, c'est-à-dire la mise en oeuvre de tout ou partie des fonctions réalisées par cette machine dans des conditions optimales de mode opératoire.

Ainsi qu'on pourra l'observer sur la figure 1, le dispositif d'interfaçage objet de la présente invention comporte au moins des modules de discrimination du degré de connaissance de cette machine par l'utilisateur. Sur la figure 1 précitée, les modules de discrimination sont notés 1a, 1a', 1a", ..., 1a"' et 1b, ..., 1b'. Leur nombre n'est pas limitatif. Ces modules de discrimination peuvent correspondre, dans un mode de réalisation particulier non limitatif, à des touches de fonctions reconfigurables, c'est-à-dire des touches dont l'appui engendre une action directement liée à des éléments d'information affichés par l'intermédiaire du dialogue interactif à destination de l'utilisateur.

Dans ce but, le dispositif objet de la présente invention comporte également un module 2 d'interfaçage visuel permettant d'afficher dans le cadre du dialogue interactif précité une pluralité de niveaux d'états fonctionnels de la machine considérée.

D'une manière générale, on indique que le module 1 d'interfaçage visuel peut être constitué par un écran à cristaux liquides tel qu'un écran à matrice passive ou à matrice active par exemple. D'une manière générale, on indique qu'en liaison avec le module 2 d'interfaçage visuel, les modules 1a, 1a', 1a", ..., 1a'' ' et 1b, ..., 1b' de discrimination du degré de connaissance de la machine par l'utilisateur peuvent être avantageusement disposés à la périphérie du module 2 d'interfaçage visuel et en particulier selon des directions orthogonales, correspondant par exemple à un adressage en x et en y de la zone d'affichage du module 2 d'interfaçage visuel, afin de jouer le rôle d'un navigateur multidirectionnel ainsi qu'il sera décrit de manière détaillée ultérieurement dans la description. En outre, ainsi que représenté sur la figure 1 précitée, le dispositif objet de l'invention comporte un module adaptatif de sélection par l'utilisateur de niveaux d'états fonctionnels successifs et d'états fonctionnels déterminés parmi ces niveaux d'états fonctionnels successifs.

Sur la figure 1 on a représenté le module adaptatif de sélection comme un ensemble de touches de fonctions notées 3 et 4, lesquelles correspondent à des touches spécifiques pouvant être sensiblement de même nature que les modules de discrimination 1a, 1a', 1a",..., 1a"' précédemment mentionnés, mais dont la fonction propre est allouée définitivement pour assurer une navigation parmi la pluralité de niveaux d'états fonctionnels précités.

Bien entendu, les modules 3 et 4, lesquels peuvent correspondre par exemple à une fonction de sortie d'une page d'affichage notée "exit" ou au contraire de validation notée "valid" d'une page d'affichage et d'une sélection dans cette page d'affichage d'un ou plusieurs états fonctionnels constituant un groupe d'états fonctionnels dans un des niveaux d'états fonctionnels précités, sont accompagnés d'une mémoire interne 5 de type ROM, permettant de mémoriser l'ensemble des données de programme et, en particulier, du programme de déroulement du dialogue interactif entre le dispositif d'interfaçage IHM objet de la présente invention et l'utilisateur, d'une mémoire de travail de type mémoire RAM référencée 6, d'une unité de calcul référencée 8 et d'une liaison par bus référencée 7, laquelle permet d'assurer la liaison entre les éléments précités et bien entendu le module d'interfaçage visuel 2 et les modules de discrimination 1a, 1a', 1a", ..., 1a"' et 1b, ..., 1b' et les modules adaptatifs de sélection 3 et 4 précédemment mentionnés.

D'une manière générale, on indique que le module adaptatif de sélection permet une présentation sélective et un choix sélectif des niveaux d'états fonctionnels successifs à l'utilisateur, ainsi qu'une sélection d'états fonctionnels déterminés parmi chacun de ces niveaux d'états fonctionnels par l'utilisateur précité. Bien entendu cette sélection est effectuée par ce dernier, par l'intermédiaire du module 2 d'interfaçage visuel en fonction du degré de connaissance discriminé de la machine d'état par l'utilisateur considéré. Ainsi, la sélection de niveaux d'états fonctionnels successifs par navigation parmi la pluralité de niveaux d'états fonctionnels et la sélection d'états fonctionnels parmi ces différents niveaux, permet à l'utilisateur d'établir une configuration courante pour la machine d'état considérée.

Sur la figure 1, on indique que la machine d'état est référencée Σ et est reliée par l'intermédiaire d'une liaison par bus à l'unité de calcul 8 et finalement à l'ensemble des éléments précédemment décrits, afin d'assurer le transfert de la configuration courante choisie par l'utilisateur pour assurer les chargement du système d'exploitation défini par ce dernier.

En ce qui concerne l'unité de calcul 8, on indique que celle-ci peut être constituée par un micro-contrôleur, cette unité de calcul à partir des éléments de programme mémorisés dans la mémoire permanente de type ROM 5 permettant d'assurer la conduite du dialogue interactif et la mémorisation et la transmission à la machine d'état S de la configuration courante précédemment mentionnée.

En ce qui concerne la notion de degré de connaissance discriminé de la machine d'état par l'utilisateur considéré, on indique que les degrés de connaissance peuvent avantageusement être quantifiés selon un nombre de degrés dépendant bien entendu de la complexité du système d'exploitation de la machine d'état considérée.

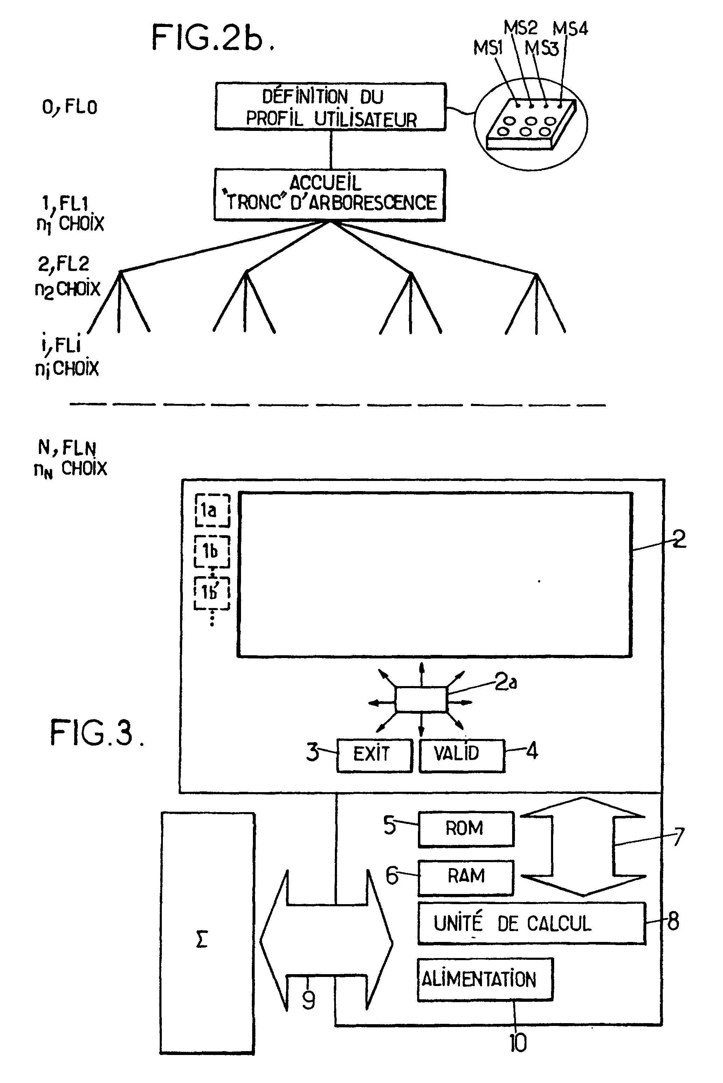

Différents modes de réalisation non limitatifs des modules de discrimination du degré de connaissance de la machine d'état par l'utilisateur seront maintenant décrits en liaison avec les figures 2a et 2b.

Sur la figure 2a, on a représenté un mode de réalisation préférentiel des modules de discrimination du degré de connaissance de la machine par l'utilisateur considéré.

Ainsi que représenté sur la figure précitée, ces modules de discrimination peuvent être constitués par une page écran d'accueil affichée sur le module 2 d'interfaçage visuel et invitant l'utilisateur à déclarer son profil de connaissance. Pour cette raison, sur la figure 2a, le module d'interfaçage visuel est réputé afficher une incitation à la déclaration du degré de connaissance par l'intermédiaire d'un point d'interrogation par l'utilisateur considéré. Lorsque les degrés de connaissance sont quantifiés, de 0 à 2 à titre d'exemple non limitatif, un niveau 0 correspondant à un utilisateur novice, un degré 1 correspondant à un utilisateur habitué et un degré 2 correspondant à un utilisateur expert de la machine d'état considérée, sur apparition de l'incitation précédemment mentionnée, l'utilisateur peut alors par l'actionnement d'une des touches constitutives des modules de discrimination 1a, 1a', 1a", ..., 1a"' et 1b, ..., 1b' par exemple, auxquels ont été dédiés les degrés de connaissance correspondants.

On entend en particulier que l'allocation de fonction aux touches précitées peut alors être modifiée après la sélection du degré de connaissance par l'utilisateur aux fins d'allouer des fonctions de sélection en x et en y aux touches précédemment mentionnées, ainsi qu'il sera décrit de manière plus détaillée ultérieurement dans la description.

Ainsi qu'on l'a en outre représenté en figure 2a et selon une caractéristique particulièrement remarquable du dispositif objet de la présente invention, l'ensemble constitué par la page écran d'accueil, à laquelle peut être attribué un niveau fonctionnel d'ordre 0, désigné par FL₀, le profil de connaissance introduit correspondant à la page écran d'accueil précitée, auquel peut être attribué le niveau fonctionnel d'ordre 1 désigné par FL₁, et l'ensemble des niveaux d'états fonctionnels successifs, notés sur la figure 2a, niveau fonctionnel d'ordre 2 désigné par FL₂, puis niveaux fonctionnels successifs d'ordre i, désignés FLᵢ, jusqu'au niveau fonctionnel N désigné FL_{N}, sont alors configurés sous forme d'une structure arborescente formée par un élément racine, constitué par le profil de connaissance de l'utilisateur lorsque le degré de connaissance par la machine par ce dernier a été discriminé et par une structure arborescente système dans laquelle l'ensemble des fonctions accessibles du système d'exploitation de la machine d'état est référencé, de façon à constituer une structure arborescente système accessible global, fonction du profil de connaissance de l'utilisateur considéré.

Sur la figure 2a, on a représenté pour chaque niveau fonctionnel de rang i désigné par Flᵢ le nombre de choix nᵢ disponible au niveau de chaque état fonctionnel pour l'utilisateur considéré.

On comprend ainsi qu'en fonction du degré de connaissance de ce dernier, il est possible de rendre accessible un nombre restreint de fonctions pour chaque niveau fonctionnel considéré, étant entendu que les fonctions rendues accessibles sont suffisantes pour assurer un paramétrage convenable du système d'exploitation considéré. Ainsi, en fonction du degré de connaissance de la machine par l'utilisateur, il est possible de rendre accessible un nombre plus ou moins important de fonctions pour chacun des niveaux fonctionnels FL_{N} en réduisant ou augmentant le nombre de choix nᵢ.

Un deuxième mode de réalisation non limitatif, mode de réalisation simplifié des modules de discrimination du degré de connaissance de la machine par l'utilisateur, sera maintenant décrit en liaison avec la figure 2b.

Le mode de réalisation de la figure 2b peut être mis en oeuvre pour des machines d'état relativement simples, telles que par exemples des pavés de commande de téléviseur, dans lesquels le nombre de fonctions n'est toutefois pas très important.

Dans un tel cas, on indique que le module 2 d'interfaçage visuel peut être constitué par l'écran du téléviseur lui-même, de manière connue en tant que telle, l'ensemble des pages écran permettant le déroulement du dialogue interactif étant affiché sur l'écran du téléviseur précité. Dans un tel cas, et selon un aspect particulier non limitatif du dispositif objet de la présente invention, la définition du profil utilisateur, c'est-à-dire le niveau fonctionnel d'ordre 0 FL₀, peut être simplifié par la mise en oeuvre sur le boîtier de commande représenté en figure 2b, d'un ensemble de micro-contacts notés Ms₁ à MS₄, lesquels permettent de sélectionner le degré de connaissance de la machine d'état par l'utilisateur sur incitation à partir d'une page écran affichée sur l'écran du téléviseur.

La navigation parmi la structure arborescente représentée en figure 2b, laquelle est représentée identique à celle de la figure 2a, peut alors être effectuée à partir des boutons de commande du boîtier de télécommande, par exemple.

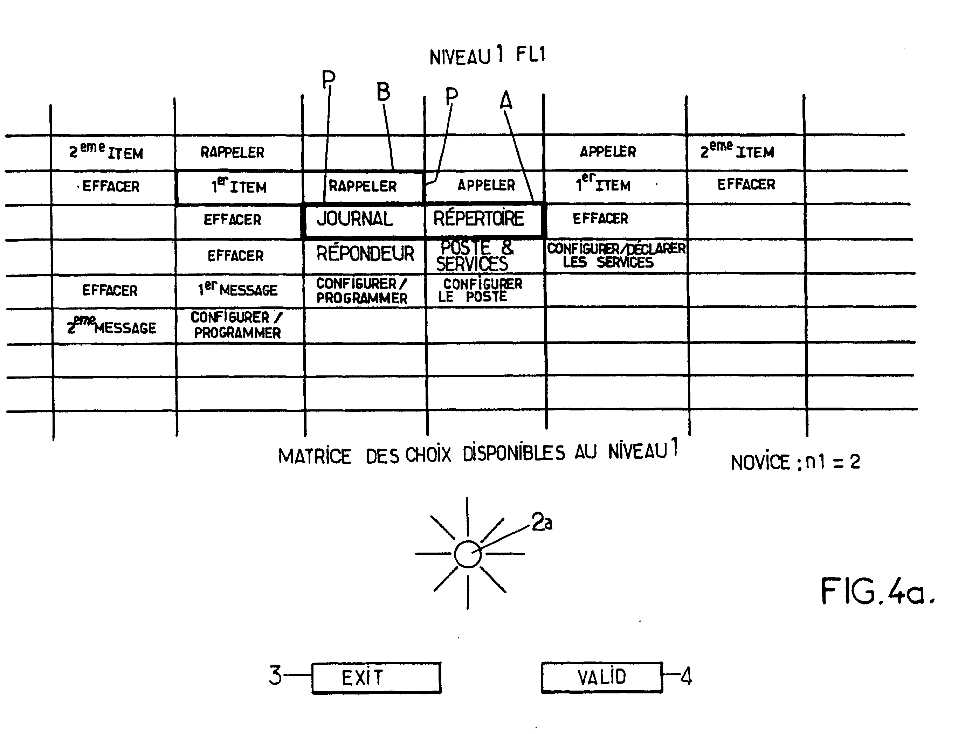

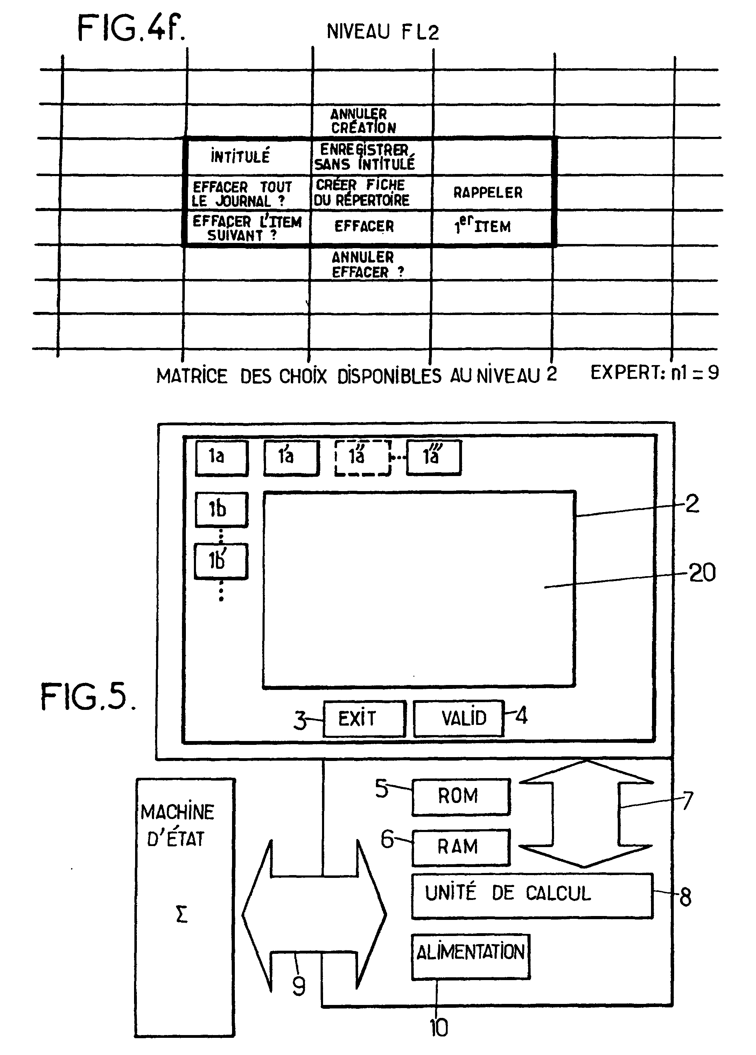

Un exemple de mise en oeuvre du dispositif IHM objet de la présente invention dans un mode de réalisation préférentiel non limitatif sera maintenant donné en liaison avec la figure 3 et les figures 4a à 4f.

Sur la figure 3, on a représenté un dispositif conforme à l'objet de la présente invention tel que représenté en figure 1, mais dans lequel, outre les modules de discrimination du degré de connaissance de la machine par l'utilisateur 1a, 1b, ..., 1b', il a été prévu un navigateur multi-directionnel portant la référence 2a, permettant d'assurer en particulier la sélection d'états fonctionnels déterminés parmi chacun des niveaux d'états fonctionnels considérés. D'une manière générale, on indique que le navigateur multi-directionnel peut être constitué par une manette de commande permettant le déplacement d'un pointeur P sur le module d'interfaçage visuel 2 précédemment mentionné. Ainsi, sur la figure 3, les flèches associées au navigateur multi-directionnel 2a symbolisent le déplacement du pointeur sur l'écran du module 2 d'interfaçage visuel. Sur la figure 3, les mêmes éléments portent les mêmes références que sur la figure 1.
Ainsi qu'on l'a en outre représenté en figure 4a, les modules adaptatifs de sélection par l'utilisateur de niveaux d'états fonctionnels successifs FL₀ à FL_{N} peuvent comprendre un système d'affichage par l'intermédiaire du module 2 d'interfaçage visuel de chaque niveau d'état fonctionnel FL₀ à FL_{N}.

Ainsi que représenté sur la figure 4a et dans un mode de réalisation préférentiel, chaque niveau fonctionnel est affiché sous forme d'une matrice bi-dimensionnelle de cellules, chaque cellule représentant un état fonctionnel déterminé du niveau d'état fonctionnel considéré.

Dans les figures 4a à 4f, l'affichage de chaque niveau fonctionnel sous forme d'une matrice bi-dimensionnelle de cellules est dédié à une application non limitative du dispositif d'interfaçage IHM objet de la présente invention, à un terminal téléphonique. Dans ce cas, on indique que la mise en oeuvre d'un navigateur multi-directionnel peut permettre de supprimer les touches reconfigurables, ces dernières étant représentées en traits mixtes sur la figure 3.

De manière plus spécifique, la figure 4a représente la distribution des cellules dans la matrice bi-dimensionnelle pour le niveau fonctionnel 1 désigné par FL₁. Ce niveau fonctionnel peut comporter des cellules relatives à un journal, un répertoire, un répondeur, une fonction de rappel désignée par "rappeler" une fonction d'appel désignée par "appeler", des fonctions d'effacement désignées par "effacer", des fonctions de configuration et de programmation désignées par "configurer/programmer" et des fonctions de configuration de poste téléphonique désignées par "configurer le poste" par exemple.

D'autres fonctions plus spécifiques désignées par "premier item", "deuxième item" peuvent être prévues.

Sur la figure 4a, les fonctions accessibles pour le niveau fonctionnel FL₁ correspondent à un nombre réduit de fonctions 2 pour un utilisateur novice. Le nombre de fonctions accessibles est symbolisé par un pointeur P constitué par un élément rectangulaire en trait fort et permettant d'englober plusieurs cellules de la matrice bi-dimensionnelle de cellules. Ainsi, pour le niveau fonctionnel FL₁ et pour le degré de connaissance novice, le nombre de choix possible est nᵢ = 2, le pointeur P englobant deux cellules.

D'une manière générale, en fonction du nombre nᵢ de choix possibles pour chaque niveau fonctionnel FLᵢ, le pointeur P est constitué par une zone délimitée par un contour fermé, englobant nᵢ cellules. Lorsque les cellules de fonction sont rectangulaires, le pointeur P, ainsi que représenté au dessin, est formé par un rectangle englobant nᵢ cellules.

Après avoir déplacé à l'aide du navigateur multi-directionnel le pointeur ainsi formé vers le haut et la gauche de la position A à la position B, l'utilisateur est en mesure de sélectionner le premier item par la touche de validation 4.

En fait, selon un aspect remarquable du dispositif objet de la présente invention, après l'opération de discrimination du degré de connaissance de la machine d'état par l'utilisateur, aux modules de discrimination 1a, 1a', 1a", ..., 1a"' et 1b, ..., 1b', un adressage x, y correspondant au nombre nᵢ de cellules de fonction, susceptibles d'être englobées par le pointeur P, est alloué à ces modules de discrimination. Par définition, les modules de discrimination 1a, 1a', 1a", ..., 1a"' définissent l'adresse d'une colonne de cellules de fonction englobées par le pointeur P et les modules de discrimination 1b, ..., 1b', celle d'une ligne de cellules de fonction englobées par ce pointeur. La sélection d'une cellule englobée par le pointeur P peut être effectuée par actionnement des modules de discrimination d'adresse correspondante. Cette discrimination peut alors être suivie d'une sélection par la touche de validation VALID, 4.

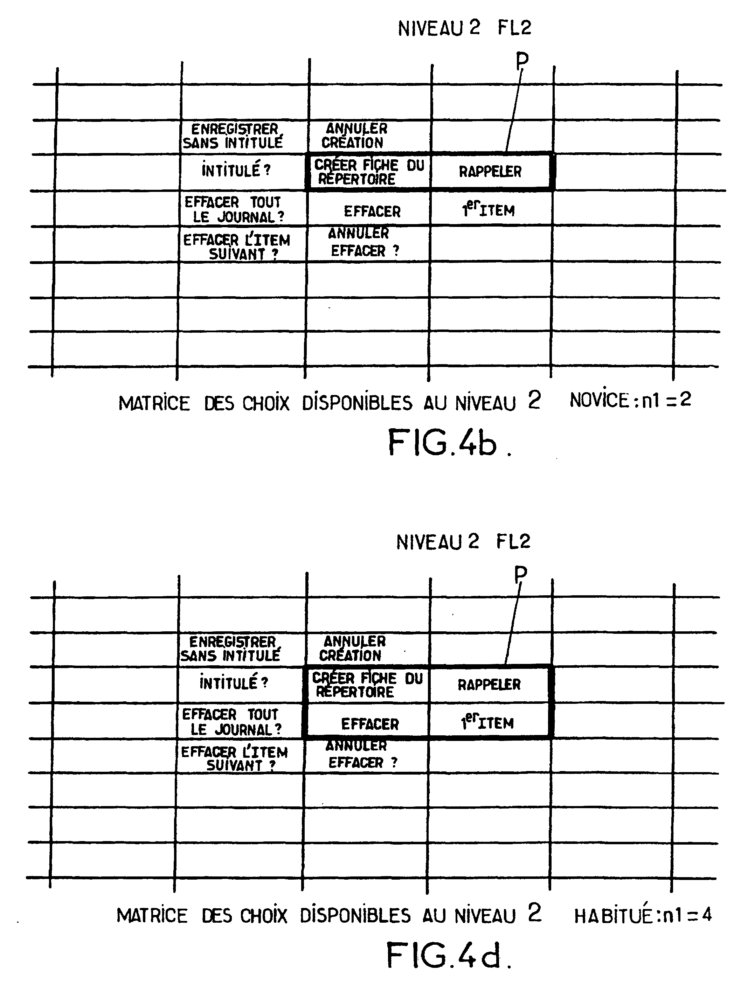

Après cette opération, l'utilisateur peut passer au niveau fonctionnel FL₂ représenté en figure 4b. Le niveau précité correspond à la sous-arborescence du domaine journal du niveau précédent FL₁, dans laquelle l'utilisateur a sélectionné le premier item. En effet, il s'agit précisément de choisir ici des fonctions qui concernent le premier item du journal et pas un autre.

Grâce à la mise en oeuvre des touches 4 et 3 de validation et de sortie ou échappement, l'utilisateur est ainsi en mesure de poursuivre la démarche de sélection en descendant à un niveau suivant, par exemple en référence à la figure 4a, créer une fiche du répertoire où des liens sont prévus entre des éléments existants du répertoire, des actions prévues pour les éléments du répertoire etc... En ce qui concerne les différentes fonctions accessibles du niveau fonctionnel FL₂, on indique que celles-ci peuvent comporter une fonction d'effacement du journal désignée par "effacer tout le journal", une fonction d'effacement de l'item suivant désignée par "effacer l'item suivant", une fonction d'effacement notée "effacer", une fonction d'annulation d'effacement notée "annuler effacer", une fonction d'enregistrement notée "enregistrer sans intituler" et une fonction d'annulation de création notée "annuler création".

Selon un aspect remarquable du dispositif objet de la présente invention, on indique que la vitesse de dépassement au cours de la navigation peut être prise en compte par l'intermédiaire du navigateur multi-directionnel par l'intermédiaire de la pression exercée sur ce dernier, afin d'accélérer la navigation et la descente dans les différents niveaux fonctionnels précités. En effet, dans le cas où l'utilisateur souhaite aller directement du dernier item du journal pour l'enregistrer sans intituler, il lui suffit de maintenir avec pression la direction haut/gauche pour y accéder. Une unique validation lui permet en dernier lieu de confirmer expressément son choix.

Il est donc possible de passer d'un niveau N à un niveau N+1 pour atteindre très rapidement le niveau N+1 en question et le choix souhaité.

Alors qu'une telle manipulation de la part de l'utilisateur implique un début de maîtrise ou même une maîtrise confirmée du système d'exploitation de la machine d'état, ici le terminal téléphonique, selon un aspect non limitatif du dispositif objet de la présente invention, outre l'affichage des cellules et de la matrice bidirectionnelle affectée à chaque niveau, il est possible de procéder à l'affichage de l'arborescence des niveaux successifs tels que représentés en figures 2a ou 2b. Un tel affichage permet d'assurer un repérage plus facile dans les divers niveaux d'états fonctionnels pour l'utilisateur dont le degré de connaissance est moins confirmé.

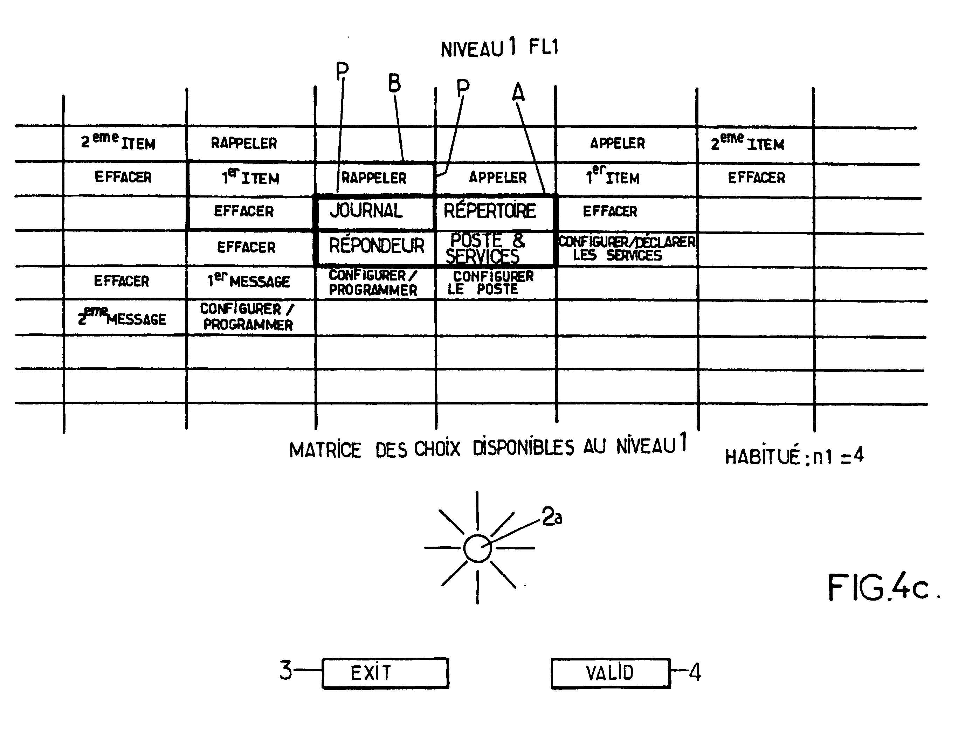

- La figure 4c représente la matrice bi-dimensionnelle de cellule de la figure 4a pour le même niveau fonctionnel FL₁ pour un degré de connaissance d'un utilisateur habitué, c'est-à-dire dont le degré de connaissance de la machine d'état est moyen. Dans ce cas, le pointeur est élargi à 4 cellules adjacentes, le nombre de choix dans ce cas pour le niveau fonctionnel FL₁ étant égal N₁ = 4. On voit en particulier que l'utilisateur dispose dès la sélection du niveau fonctionnel précité d'un choix parmi quatre cellules telles que le journal, le répondeur, le répertoire ou poste et services.

La manoeuvre du navigateur multi-directionnel en haut et à gauche par déplacement du pointeur puis par sélection du premier item de la position A à la position B, par l'intermédiaire de la touche 4 de validation, permet le choix du premier item et le passage au niveau fonctionnel suivant FL₂ tel que représenté en figure 4d.

Le niveau fonctionnel précité correspond bien entendu à la sous-arborescence du domaine journal, dans laquelle l'utilisateur a sélectionné le premier item. Ainsi, il s'agit toujours précisément de choisir des fonctions concernant le premier item journal.

A l'observation des figures 4c et 4d, on peut constater, à la différence du dialogue novice pour les figures 4a et 4b, l'existence de l'extension du champ de visualisation immédiate des différents choix possibles par passage de deux à quatre choix possible dans chaque pointeur visualisé sous forme d'un ensemble de cellules.

Ainsi, il est manifeste qu'un utilisateur habitué, c'est-à-dire disposant d'un degré de connaissance moyen de la machine d'état, tire ainsi avantage de cette approche plus riche en propositions immédiates de fonctions accessibles et donc plus rapides. En effet, sa plus grande maîtrise de l'agencement et des rapports des fonctions de la machine d'état lui permet de gérer aisément quatre choix à la fois. On rappelle que, de même que dans le cas des figures 4a et 4b pour lesquelles le degré de connaissance correspondait à un utilisateur novice, il est possible, outre l'affichage des cellules constitutives de la matrice bi-dimensionnelle représentée en figures 4a et 4b, d'afficher sur le module 2 d'interface visuel l'arborescence des différents niveaux de fonction, telle que représentée en figures 2a ou2b.

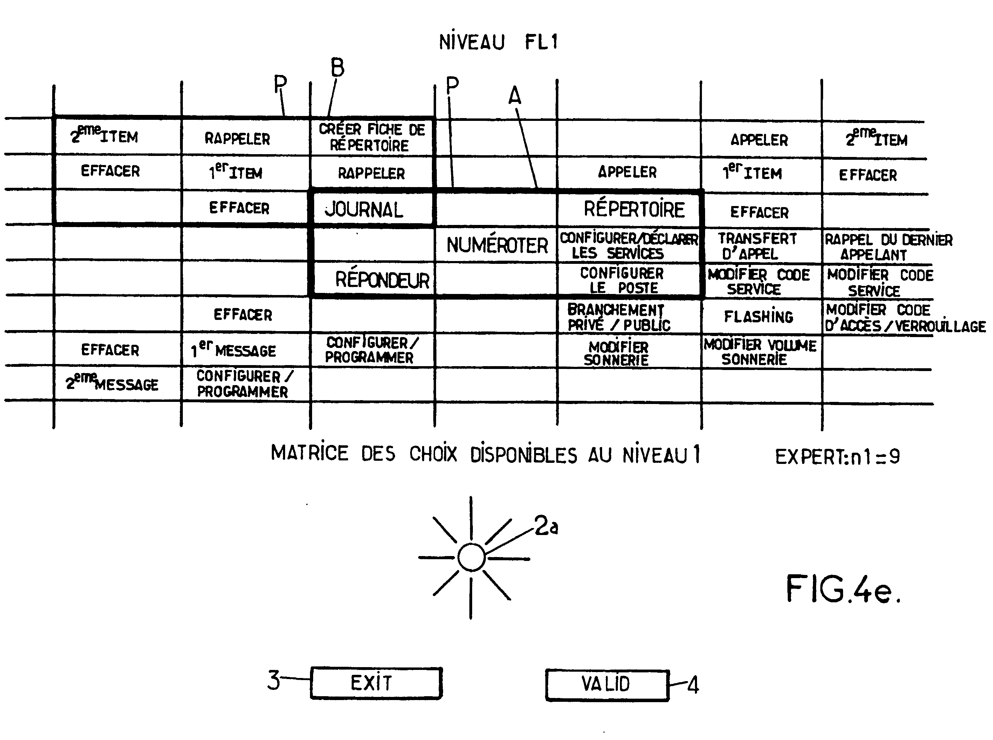

Les figures 4e et 4f représentent les mêmes matrices bidimensionnelles de cellules pour l'application considérée à un terminal téléphonique lorsque l'utilisateur est un utilisateur expert qui dispose donc d'un degré de connaissance particulièrement affirmé de la machine d'état considérée.

Dans ce cas, et pour des fonctions correspondant sensiblement à celles représentées dans chaque cellule fonctionnelle à celle des figures 4c et 4d, mais toutefois élargies, le pointeur P est cette fois constitué par un pointeur recouvrant globalement neuf cellules adjacentes, l'utilisateur expert disposant de ce fait de neuf choix possibles, soit n₁ = 9 pour le niveau fonctionnel FL₁ représenté en figure 4e.

Ainsi, dès la sélection du niveau fonctionnel 1, le pointeur recouvre les neuf cellules centrales composées de la cellule "journal", de la cellule "répertoire", de la cellule "numéroter", de la cellule "répondeur" et des cellules "configurer/déclarer des services" et "configurer le poste".

Pour un déplacement semblable de la position A à la position B du pointeur telle que représentée en figure 4e, c'est-à-dire un déplacement réalisé à l'aide du navigateur multi-directionnel vers le haut à gauche, puis après avoir sélectionné le premier item, par l'intermédiaire de la touche 4 dans l'écran proposé, le niveau fonctionnel FL₂ représenté en figure 4f, correspond toujours à la sous-arborescence du domaine journal, dans laquelle l'utilisateur a sélectionné le premier item. Ainsi il s'agit toujours précisément de choisir les fonctions concernant le premier item du journal.

A la différence du dialogue interactif pour un utilisateur habitué tel que représenté en figures 4c et 4d, on constate à nouveau l'extension du champ de visualisation immédiate des différents choix possibles et le passage à neuf choix possibles dans chaque pointeur visualisé.

Il est encore manifeste qu'un utilisateur expert du système d'exploitation du terminal téléphonique constituant la machine d'état tire d'autant plus partie de cette présentation de fonctions plus riche en propositions immédiates, donc plus rapide. Sa grande maîtrise du système d'exploitation lui permet de gérer neuf choix à la fois.

D'une manière générale, il faut souligner que pour chaque profil utilisateur tels que mentionnés précédemment, novice, habitué ou expert ou autres, les matrices bidimensionnelles de cellules de fonctions conservent une distribution semblable.

En effet, afin de conserver une homogénéité de la descente dans les niveaux fonctionnels successifs au cours de la navigation, et également afin de capitaliser les éléments progressivement maîtrisés par apprentissage par l'utilisateur, les matrices bidimensionnelles affichées correspondant aux profils utilisateurs précités, respectent à chaque fois les dispositions ci-après :
- en allant vers le haut et vers la gauche : ensemble d'éléments/actions ou fonctions ayant trait au journal ;
- en allant vers le haut et vers la droite : ensemble d'éléments/actions ou fonctions ayant trait au répertoire ;
- en allant vers le bas et vers la gauche : ensemble d'éléments/actions ou fonctions ayant trait au répondeur ;
- en allant vers le bas et vers la droite : ensemble d'éléments/actions ou fonctions ayant trait au postes et services.

En fait, on comprend que chaque matrice bidimensionnelle de cellules est constituée par la projection dans un plan, le plan de l'écran du module d'interfaçage visuel 2, de l'arborescence représentée en figure 2a ou 2b, en particulier de chaque niveau d'états fonctionnels Flᵢ.

L'agencement relatif des cellules constitutives d'un plan représentatif d'un niveau d'états fonctionnels pour constituer la matrice bidimensionnelle de cellules est réalisé en fonction des critères d'ergonomie de l'ensemble, tels qu'indiqués précédemment.

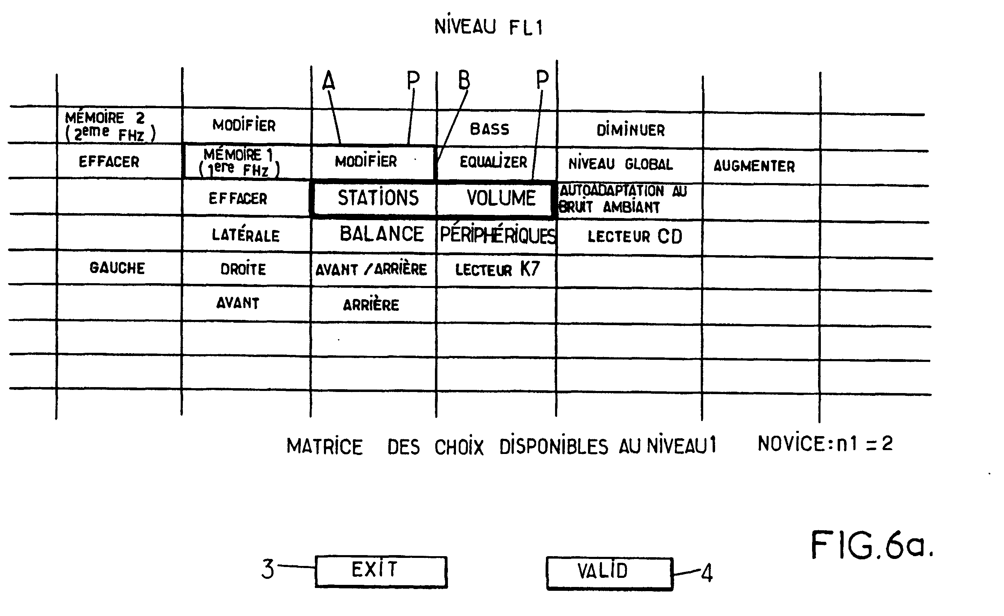

Un deuxième exemple de mise en oeuvre du dispositif d'interfaçage IHM objet de la présente invention pour une machine d'état constituée par un autoradio lorsque le navigateur multi-directionnel est formé par un écran tactile équipant le module d'interfaçage visuel 2 sera maintenant décrit en liaison avec la figure 5 et les figures suivantes.

Sur la figure 5, on a représenté le dispositif d'interfaçage IHM objet de la présente invention, dans lequel le navigateur multi-directionnel 2a a été supprimé, mais remplacé par un écran tactile portant la référence 20.

Dans un mode de réalisation non limitatif, on indique les touches de fonction 1a, 1a', 1a", ..., 1a"' et 1b, ..., 1b' peuvent être maintenues, leur fonction étant activée. Dans la figure 5, les mêmes références désignent les mêmes éléments que dans le cas de la figure 3 et de la figure 1.

Dans une variante de réalisation toutefois, les touches précitées ainsi que, le cas échéant, les touches de validation 4 et de sortie 3 peuvent être supprimées et réalisées au niveau de l'écran tactile 20, lequel occupe par exemple la plus grande surface délimitée en trait renforcé sur la figure 5.

Sur la figure 6a, on a représenté la matrice bi-dimensionnelle des cellules de fonction dans une application où la machine d'état est constituée par un autoradio muni de l'écran tactile tel que représenté en figure 5.

Ainsi que représenté sur la figure 6a précitée, mais de manière non limitative, les cellules de la matrice bi-dimensionnelle de cellules de fonction peuvent comporter dans cette application une cellule relative à la recherche de stations notée "stations", une cellule relative au volume notée "volume", ainsi qu'une cellule de balance permettant d'équilibrer le niveau relatif des voies stéréo de l'autoradio, ainsi qu'une cellule de fonction périphérique notée "périphériques".

D'autres cellules sont représentées, telles que par exemple des cellules de mémoire, mémoire 1 et mémoire 2, permettant de mémoriser des fréquences d'émetteurs radios spécifiques notées "première FHz et deuxième FHz", des cellules de modification notées "modifier", d'égalisation notées "equalizer", de niveau global notées "niveau global", de lecteur de disque optiques notées "lecteurs CD", de téléphonie mobile notées "mains libres GSM", d'augmentation et de diminution notées "augmenter et diminuer", et enfin de voies droite et gauche notées "gauche droite et gauche" et "avant arrière", ainsi que d'auto adaptation aux bruits ambiants sont prévues.

La figure 6a reprend à titre d'exemple le déplacement du pointeur vers le haut à gauche par l'utilisateur par glissement à l'aide d'un doigt sur l'écran tactile 20. La sélection de la mémoire peut être effectuée par une pression sur la mémoire 1, première FHz ou, le cas échéant, par la touche 4 de validation par exemple.

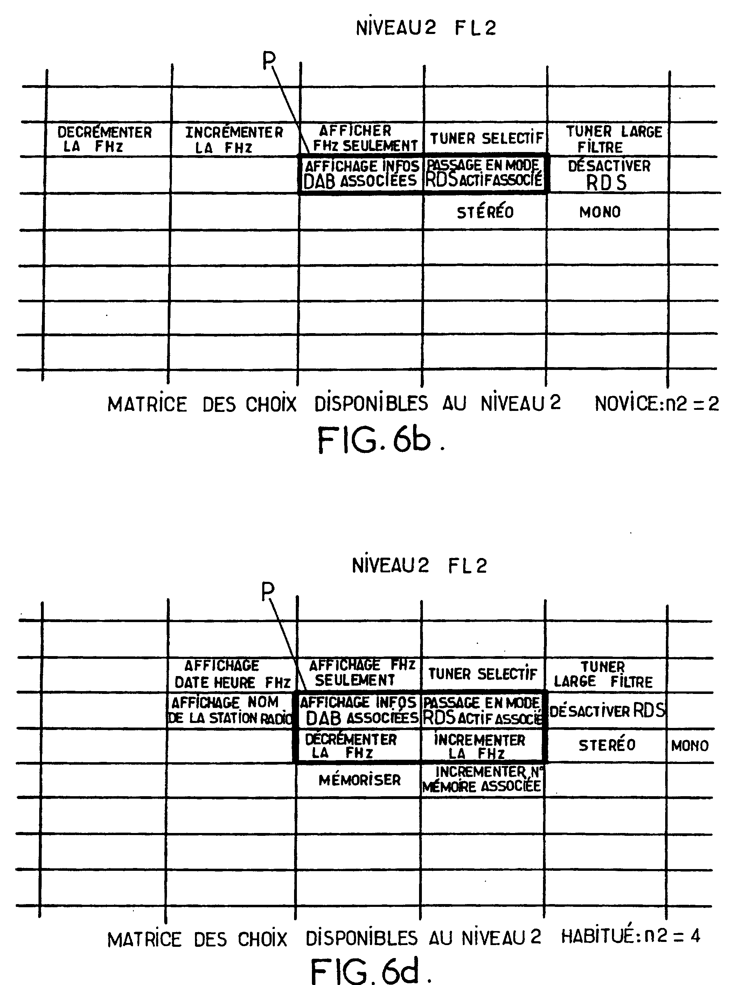

La sélection effectuée permet ainsi de passer au niveau fonctionnel FL₂ représenté en figure 6b.

Le niveau fonctionnel précité correspond donc à la sous-arborescence du domaine "stations", dans laquelle l'utilisateur a sélectionné la mémoire 1. Ainsi, il s'agit précisément de choisir ici les actions ou fonctions concernant la mémoire 1 des stations radio enregistrées.

Dans ces cas, il est également possible de poursuivre la démarche, c'est-à-dire la navigation, en descendant à un niveau fonctionnel tel que le niveau FL₃, avec par exemple le choix affichage infos DAB associé, représenté dans la cellule de la figure 6b. Dans un tel cas, des liens sont prévus entre les éléments d'affichage, informations transmises par la bande radio numérique et de mémorisation de la configuration sélectionnée par l'utilisateur.

La notion de vitesse de déplacement sur l'écran tactile peut alors être prise en compte, afin d'accélérer la navigation, c'est-à-dire la descente dans les différents niveaux. En effet, si l'utilisateur souhaite procéder à une décrémentation de la fréquence d'une station, il lui suffit de déplacer rapidement son doigt vers le haut/et la gauche, pour y accéder.

Toutefois, une telle manipulation de la part de l'utilisateur implique, de fait, un début de maîtrise du système d'exploitation de la machine d'état, ici l'autoradio, le circuit d'interfaçage IHM adaptatif objet de l'invention s'adaptant alors automatiquement à cette évolution de comportement de l'utilisateur, aux fins de proposer à ce dernier par exemple autour de la fonction de décrémentation, le passage de la mémoire M à la mémoire M+1 suivante pour en modifier également la valeur.

Ainsi, conformément à un aspect particulièrement remarquable du dispositif d'interfaçage IHM de la présente invention, il est tout à fait possible de passer d'un niveau N à un niveau N+1 pour atteindre très rapidement le niveau fonctionnel FL_{N+1} précité et le choix souhaité avec une très grande flexibilité et une très grande auto-adaptativité du dispositif d'interfaçage IHM précité.

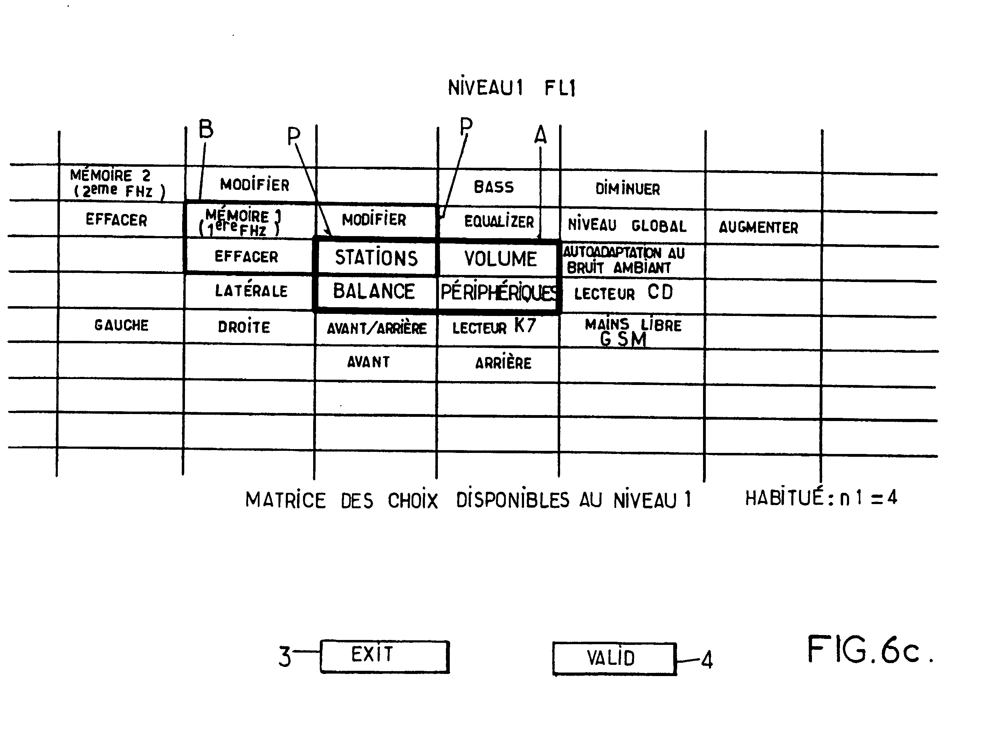

La figure 6c représente une matrice bidirectionnelle dans la même application que celle représentée en figure 6a, mais pour laquelle le degré de connaissance discriminé de l'utilisateur correspond à un utilisateur habitué, c'est-à-dire ayant un degré de connaissance moyen de la machine d'état considérée. Dans ce cas, le pointeur englobe quatre cellules de la matrice bi-dimensionnelle de cellules de fonctions, le nombre de choix pour le niveau fonctionnel d'ordre 1 FL₁ étant égal à n₁ = 4.

Après avoir glissé au moyen de l'index par exemple sur l'écran tactile 20 de l'écran vers la position en haut/gauche, et avoir sélectionné la mémoire 1, première FHz, par l'intermédiaire de la touche de validation 4 ou par l'intermédiaire d'une pression sur la cellule mémoire 1 correspondante, le niveau fonctionnel FL₂ d'ordre 2 obtenu est représenté en figure 6d.

Ce niveau fonctionnel correspond toujours à la sous-arborescence du domaine station, dans laquelle l'utilisateur a sélectionné la mémoire 1. Ainsi, il s'agit précisément de choisir ici les actions ou fonctions concernant la mémoire 1 des stations radio enregistrées. Sur la figure 6d, la matrice bi-dimensionnelle des cellules de fonction comporte, à titre d'exemple, des fonctions telles que : affichage d'information DAB, notée "affichage info DAB associée", "passage en mode RDS actif associé", décrémentation de la fréquence, notée "décrémenter la FHz", et d'incrémentation de la fréquence, notée "incrémenter la FHz". D'autres cellules sont prévues, telles que affichage de la date, de l'heure et de la fréquence FHz, affichage de la fréquence, notée "affichage FHz seulement", "tuner sélectif", "tuner à large filtre", affichage du nom de la station radio, désactivation RDS notée "désactiver RDS", stéréophonie notée "stéréo", monophonie notée "mono", mémorisation notée "mémoriser" et incrémentation du numéro de mémoire associé notée "incrémenter le numéro associé".

A la différence de la matrice bi-dimensionnelle pour un degré de connaissance correspondant à un utilisateur novice, on constate ici l'extension du champ de visualisation immédiate des différents choix possibles par passage de deux à quatre choix possibles dans chaque pointeur visualisé, n₂ = 4.

Il est manifeste qu'un utilisateur habitué dont le degré de connaissance du système d'exploitation de la machine d'état est moyen, ici l'autoradio, tire avantage de la présentation plus riche en fonctions immédiates, et donc plus rapide : sa plus grande connaissance du système d'exploitation lui permet ainsi de gérer aisément quatre choix à la fois. En outre, il est possible lors du passage d'un niveau à un niveau supérieur lors de la remontée des niveaux au cours de la navigation, de modifier le degré de connaissance de l'utilisateur, afin de conférer une plus grande flexibilité.

Ainsi, l'utilisateur gagne à la fois en visualisation immédiate et en rapidité d'accessibilité au fur et à mesure que son profil de connaissance du système d'exploitation progresse.

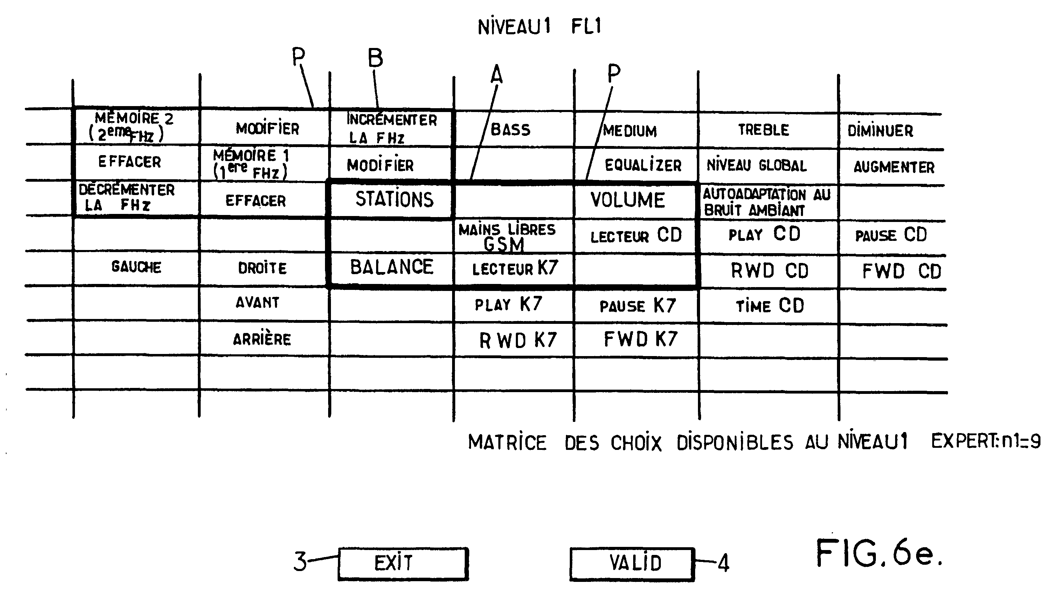

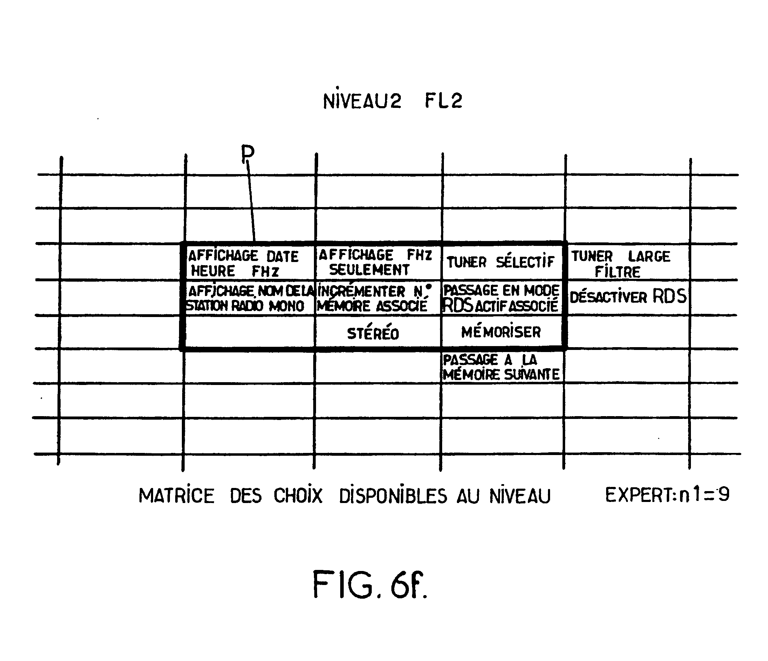

Les figures 6e et 6f sont relatives à la même application correspondant à un autoradio dans le cas où le degré de connaissance de l'utilisateur du système d'exploitation de la machine d'état correspondante est celui d'un expert connaissant parfaitement l'ensemble des fonctionnalités de cet autoradio.

Dans ce cas la matrice bi-dimensionnelle de cellules de fonctions représentée en figure 6e, peut comporter l'ensemble des fonctions disponibles pour le niveau fonctionnel FL₁ d'ordre 1 considéré.

Les cellules fonctionnelles peuvent comprendre des cellules relatives non seulement à la première mémoire mais à une deuxième mémoire notée mémoire 2 (deuxième FHz) les cellules de fonction relatives à cette mémoire telles que "effacer", "modifier" et "décrémentation de la fréquence", d'autres fonctions plus élaborées relatives en particulier à des périphériques tels que lecteur de cassettes noté "lecteur cassettes", fonctionnement de la cassette noté "play cassette", de rebobinage noté "RWD cassette", les fonctions habituelles relatives aux lecteurs de disques optiques telles que "stop CD" ou "stop cassette" pour l'arrêt de sélecteur ou du lecteur de cassette, de pause de cassette noté "pause cassette" et d'avance rapide du lecteur de cassette noté "FWD cassette". D'autres fonctions relatives aux lecteurs de disque optique notées "play CD" "RWD CD time CD, pause CD et FWD CD", peuvent être prévues ainsi que des fonctions de réglage de niveau relatif des fréquences, fréquences basses notées "Bass", fréquences moyennes notées "medium" fréquences hautes notées "treble".

Le passage par glissement de la position A à la position B d'un doigt tel que l'index vers la position en haut à gauche, puis la sélection de la mémoire 1 "première FHz" par l'intermédiaire de la touche de validation 4 ou par l'exercice d'une pression sur la cellule de fonction considérée pour l'ensemble des cellules délimitées en position B par le pointeur, c'est-à-dire "mémoire 2" "deuxième FHz" ; "modifier" ; "incrémenter", "effacer", "mémoire 1" "1ère FHz" ; "modifier" ; "effacer" et "stations", permet de passer au niveau fonctionnel FL₂ d'ordre 2 tel que représenté en figure 6f.

La matrice de cellules de fonction représentée sur la figure 6f précitée correspond toujours à la sous-arborescence du domaine station, dans laquelle l'utilisateur a sélectionné la mémoire 1. Ainsi, il s'agit précisément de choisir ici les actions ou fonctions concernant la mémoire précitée des stations radio enregistrées.

A la différence de la matrice bi-dimensionnelle de la figure 6c, pour un degré de connaissance d'un utilisateur habitué, on constate ici l'extension du champ de visualisation immédiate des différents choix possibles par passage de quatre à neuf choix possibles dans chaque position du pointeur correspondante.

Sur la figure 6f, le niveau fonctionnel FL₂ peut comporter des cellules de fonction telles que "affichage de la date et de l'heure", "FHz", "affichage de la fréquence seulement" notée "affichage FHz seulement", tuner sélectif, tuner large filtre, affichage du nom de la station radio-monophonique, incrémentation de la mémoire associée, passage en mode RDS actif associé, mémorisation et réception en stéréophonie. D'autres cellules peuvent concerner le tuner à large filtre, désactivation du RDS et passage à la mémoire suivante. La maîtrise de l'utilisateur expert lui permet de gérer neuf choix à la fois pour une navigation plus riche en fonctions proposées immédiate et donc plus rapide.

Cependant, le dispositif d'interfaçage IHM objet de la présente invention permet de faire remonter des choix du niveau fonctionnel d'ordre 2 FL₂ proposés pour un utilisateur habitué au niveau fonctionnel d'ordre 1 FL₁ du profil utilisateur expert, c'est-à-dire en définitive d'un niveau inférieur à un niveau supérieur immédiatement adjacent.

Le dispositif d'interfaçage IHM objet de la présente invention permet également de faire apparaître des raccourcis. Par exemple, ainsi que représenté en figure 6f, au niveau fonctionnel FL₂, le choix passé à la mémoire suivante est équivalent au passage au niveau fonctionnel d'ordre 1 FL₁ du choix mémoire 1 (1ère FHz) au choix mémoire 2 (2ème FHz).

L'utilisateur gagne à la fois en visualisation immédiate et en rapidité d'accessibilité au fur et à mesure que son profil de connaissance novice vers habitué, puis expert, progresse.

D'une manière générale, il est important de souligner que chaque profil de degré de connaissance utilisateur conserve un agencement des matrices bidimensionnelles similaires aux autres. En effet, afin de conserver une homogénéité dans la navigation, c'est-à-dire dans les processus de parcours de l'arborescence des fonctions représentées et surtout afin de capitaliser les éléments progressivement maîtrisés par l'utilisateur, les profils de degré de connaissance, de l'exemple précédemment donnés dans la description, respectent à chaque fois les dispositions suivantes :
- déplacement vers le haut et la gauche : ensemble d'éléments/actions ou fonctions ayant trait aux stations;
- déplacement vers le haut et vers la droite : ensemble d'éléments/actions ou fonctions ayant trait aux volumes ;
- déplacement vers le bas et la gauche : ensemble d'éléments/actions ou fonctions ayant trait à la fonction balance ;
- déplacement vers le bas et la droite : ensemble d'éléments/actions ou fonctions ayant trait aux périphériques.

Lors de la première utilisation du dispositif d'interfaçage IHM objet de la présente invention par un utilisateur donné, le degré de connaissance de l'arborescence du système d'exploitation par ce dernier est pris a priori par défaut égal au degré de connaissance d'un utilisateur novice. Ce degré de connaissance correspond à un profil utilisateur débutant. Un usager plus averti peut déclarer par retour, en page d'accueil, un degré de connaissance plus approfondi tel que par exemple utilisateur habitué ou expert. En fonction des types de systèmes d'exploitation et de l'application considérée, le nombre de degrés peut bien entendu être supérieur à trois.

La phase d'initialisation étant terminée, le dispositif d'interfaçage IHM objet de la présente invention s'adapte automatiquement au profil de degré de connaissance de l'utilisateur en assurant un découpage du menu de dialogue interactif et des fonctions présentées et un enchaînement des arborescences adaptées.

Ainsi, tout utilisateur peut progressivement prendre en mains le matériel dont il dispose. Le dispositif d'interfaçage IHM objet de l'invention permet un apprentissage progressif et complet du système, puis une reconfiguration adaptée selon la maîtrise acquise par l'utilisateur.

Enfin, pour chaque profil utilisateur considéré, il est possible de tirer profit de la dynamique tactile lorsqu'un écran tactile est utilisé, ou, le cas échéant, de la jauge de contrainte équipant le navigateur multi-directionnel de type manette de commande. Dans ces cas, une gestion dynamique des déplacements de l'utilisateur à un niveau d'arborescence donné peut alors être avantageusement effectué.

## Revendications

1. Dispositif d'interfaçage homme/machine, ladite machine étant constituée par une machine d'état configurable dans laquelle une pluralité d'états fonctionnels sont susceptibles d'être configurés par un utilisateur, par dialogue interactif, **caractérisé en ce que** ledit dispositif d'interfaçage comprend au moins :
- des moyens de discrimination du degré de connaissance de cette machine par cet utilisateur ;
- des moyens d'interfaçage visuel permettant d'afficher une pluralité de niveaux d'états fonctionnels de cette machine ;
- des moyens adaptatifs de sélection, par cet utilisateur, de niveaux d'états fonctionnels successifs et d'états fonctionnels déterminés parmi ces niveaux d'états fonctionnels, lesdits moyens adaptatifs de sélection permettant une présentation sélective et un choix sélectif de ces niveaux d'états fonctionnels successifs à cet utilisateur et une sélection d'états fonctionnels déterminés parmi chacun de ces niveaux d'états fonctionnels par cet utilisateur par l'intermédiaire desdits moyens d'interfaçage visuel en fonction du degré de connaissance discriminé de cette machine d'état par cet utilisateur, la sélection de niveaux d'états fonctionnels successifs et d'états fonctionnels déterminés parmi ces niveaux d'états fonctionnels successifs permettant à cet utilisateur d'établir une configuration courante pour cette machine d'état ;
- des moyens de calcul permettant, d'une part, la conduite dudit dialogue interactif et la mémorisation et la transmission à ladite machine d'état de ladite configuration courante, d'autre part.

2. Dispositif selon la revendication 1, **caractérisé en ce que** lesdits moyens de discrimination du degré de connaissance de cette machine par cet utilisateur sont constitués par une page écran d'accueil, affichée par lesdits moyens d'interfaçage visuel et invitant ledit utilisateur à déclarer son profil de connaissance, l'ensemble constitué par ladite page écran d'accueil, ledit profil de connaissance et lesdits niveaux d'états fonctionnels étant configuré sous forme d'une structure arborescente formée par un élément racine, cet élément racine étant constitué par le profil de connaissance de cet utilisateur, et par une structure arborescente système accessible représentative des niveaux d'états fonctionnels successifs de ladite machine, ladite structure arborescente système accessible étant fonction du profil de connaissance de cet utilisateur.

3. Dispositif selon l'une des revendications 1 ou 2, **caractérisé en ce que** lesdits moyens adaptatifs de sélection par cet utilisateur de niveaux d'états fonctionnels successifs comprennent :
- des moyens d'affichage, par l'intermédiaire desdits moyens d'interfaçage visuel, de chaque niveau d'états fonctionnels, lesdits moyens d'affichage permettant l'affichage de chaque niveau fonctionnel sous forme d'une matrice bidimensionnelle de cellules, chaque cellule représentant un état fonctionnel déterminé de ce niveau d'états fonctionnels ;
- des moyens d'activation de la sélection, dans cette matrice bidimensionnelle de cellules, d'un sous-ensemble de cellules appartenant à cette matrice bidimensionnelle de cellules, ce sous-ensemble de cellules étant déterminé en fonction du degré de connaissance de cette machine par cet utilisateur ;
- des moyens de sélection, par l'utilisateur, d'une cellule de ce sous-ensemble de cellules, ce qui permet à cet utilisateur de sélectionner l'état fonctionnel correspondant à la cellule sélectionnée pour le niveau d'états fonctionnels et d'effectuer le passage de ce niveau d'états fonctionnels au niveau d'états fonctionnels suivant.

4. Dispositif selon la revendication 3, **caractérisé en ce que** lesdits moyens de sélection, par l'utilisateur, d'une cellule de ce sous-ensemble de cellules consistent en un navigateur multi-directionnel.

5. Dispositif selon la revendication 4, **caractérisé en ce que** ledit navigateur multi-directionnel est formé par un écran tactile équipant lesdits moyens d'affichage.

6. Dispositif selon la revendication 4, **caractérisé en ce que** ledit navigateur multi-directionnel est formé par des bandes de fonction reconfigurables associées auxdits moyens d'affichage et moyens d'activation de la sélection.

7. Dispositif selon la revendication 4, **caractérisé en ce que** ledit navigateur multi-directionnel est formé par une commande manuelle associée à un dispositif de pointage des cellules affichées par lesdits moyens d'affichage.

8. Dispositif selon la revendication 7, **caractérisé en ce que** ledit navigateur multi-directionnel comporte en outre une touche de validation de pointage et une touche de sortie de niveau d'états fonctionnels permettant le passage au niveau d'états fonctionnels suivant.

9. Dispositif selon la revendication 7, **caractérisé en ce que** ledit navigateur multidirectionnel est constitué par une manette de commande équipée d'une jauge de contrainte, ce qui permet d'effectuer une gestion dynamique des déplacements de l'utilisateur à un niveau d'arborescence déterminé.

10. Dispositif selon l'une des revendications 3 à 9, **caractérisé en ce que** lesdits moyens d'activation de la sélection, dans la matrice bidimensionnelle de cellules, d'un sous-ensemble de cellules appartenant à cette matrice bidimensionnelle de cellules, sont formés par un pointeur P constitué par une zone délimitée par un contour fermé englobant un nombre nᵢ déterminé de cellules de fonctions, correspondant au nombre de choix fonction du degré de connaissance de la machine d'état par l'utilisateur.

## Claims

1. A man/machine interfacing device, said machine consisting of a configurable state machine in which a plurality of functional states can be configured by a user, by interactive dialog, **characterized in that** said interfacing device comprises at least:
- means of discrimination of the degree of knowledge of this machine by this user;
- means of visual interfacing making it possible to display a plurality of levels of functional states of this machine;
- adaptive means of selection, by this user, of successive levels of functional states and of functional states determined from among these levels of functional states, said adaptive means of selection affording this user selective presentation and selective choice of these successive levels of functional states and selection of specified functional states determined from among each of these levels of functional states by this user by way of said visual interfacing means as a function of the discriminated degree of knowledge of this state machine by this user, the selection of successive levels of functional states and of specified functional states determined from among these successive levels of functional states allowing this user to establish a current configuration for this state machine;
- means of calculation allowing, on the one hand, conduct of said interactive dialog and storage and transmission to said state machine of said current configuration, on the other hand.

2. The device as claimed in claim 1, **characterized in that** said means of discrimination of the degree of knowledge of this machine by this user consist of a home screen page, displayed by said visual interfacing means and inviting said user to declare his knowledge profile, the assembly consisting of said home screen page, said knowledge profile and said levels of functional states being configured in the form of a tree structure formed by a root element, this root element consisting of this user's knowledge profile, and of an accessible system tree structure representative of the successive levels of functional states of said machine, said accessible system tree structure being dependent on this user's knowledge profile.

3. The device as claimed in one of claims 1 or 2, **characterized in that** said adaptive means of selection by this user of successive levels of functional states comprise:
- means of display, by way of said visual interfacing means, of each level of functional states, said means of display allowing the display of each functional level in the form of a two-dimensional matrix of cells, each cell representing a specified functional state of this level of functional states;
- means of activation of the selection, in this two-dimensional matrix of cells, of a subset of cells belonging to this two-dimensional matrix of cells, this subset of cells being determined as a function of the degree of knowledge of this machine by this user;
- means of selection, by the user, of a cell of this subset of cells, thereby allowing this user to select the functional state corresponding to the cell selected in respect of the level of functional states and to switch from this level of functional states to the next level of functional states.

4. The device as claimed in claim 3, **characterized in that** said means of selection, by the user, of a cell of this subset of cells consist of a multidirectional navigator.

5. The device as claimed in claim 4, **characterized in that** said multidirectional navigator is formed of a touch screen with which said means of display are equipped.

6. The device as claimed in claim 4, **characterized in that** said multidirectional navigator is formed of reconfigurable function bands associated with said means of display and means of activation of selection.

7. The device as claimed in claim 4, **characterized in that** said multidirectional navigator is formed of a manual control associated with a pointing device for the cells displayed by said means of display.

8. The device as claimed in claim 7, **characterized in that** said multidirectional navigator furthermore comprises a pointing validation key and a functional states level exit key making it possible to switch to the next level of functional states.

9. The device as claimed in claim 7, **characterized in that** said multidirectional navigator consists of a control handle equipped with a strain gage, thereby making it possible to perform dynamic management of the movements of the user at a specified tree level.

10. The device as claimed in one of claims 3 to 9, **characterized in that** said means of activation of selection, in the two-dimensional matrix of cells, of a subset of cells belonging to this two-dimensional matrix of cells, are formed of a pointer P consisting of a zone delimited by a closed contour encompassing a specified number nᵢ of function cells, corresponding to the number of choices dependent on the degree of knowledge of the state machine by the user.

## Patentansprüche

1. Vorrichtung zur Schnittstellenbildung zwischen Mensch und Maschine, welche Maschine von einer Maschine mit konfigurierbarem Status gebildet wird, bei der mehrere Funktionszustände von einem Benutzer über einen interaktiven Dialog konfiguriert werden können, **dadurch gekennzeichnet, dass** die Vorrichtung zur Bildung einer Schnittstelle mindestens umfasst:
- Mittel zur Feststellung des Kenntnisstands, den dieser Benutzer von dieser Maschine hat;
- Vorrichtungen, die eine visuelle Schnittstelle bilden, an Hand derer mehrere Funktionsstatusebenen dieser Maschine angezeigt werden können;
- adaptive Mittel zur Auswahl aufeinanderfolgender Funktionsstatusebenen und bestimmter Funktionszustände aus diesen Funktionsstatusebenen durch diesen Benutzer, welche adaptiven Auswahlmittel eine selektive Darstellung und eine selektive Auswahl dieser aufeinanderfolgenden Funktionsstatusebenen durch diesen Benutzer und eine Auswahl bestimmter Funktionszustände aus jeder dieser Funktionsstatusebenen durch diesen Benutzer mittels der visuellen Schnittstellenmittel in Abhängigkeit des festgestellten Kenntnisstands, den dieser Benutzer von dieser Statusmaschine hat, erlauben, wobei die Auswahl aufeinanderfolgender Funktionsstatusebenen und bestimmter Funktionszustände aus diesen aufeinanderfolgenden Funktionsstatusebenen dem Benutzer ermöglicht, eine laufende Konfiguration für diese Statusmaschine zu erstellen;
- Berechnungsmittel, die einerseits das Führen des interaktiven Dialogs und andererseits das Speichern und Übertragen dieser laufenden Konfiguration an die Statusmaschine ermöglichen.

2. Vorrichtung nach Anspruch 1, **dadurch gekennzeichnet, dass** die Vorrichtungen zur Feststellung des Kenntnisstands, den der Benutzer von dieser Maschine hat, aus einer Startseite bestehen, die von den visuellen Schnittstellenvorrichtungen angezeigt wird und den Benutzer auffordert, sein Kenntnisprofil bekannt zu geben, wobei die Kombination dieser Startseite, das Kenntnisprofil und die Funktionsstatusebenen in Form einer baumartigen Struktur vorgesehen sind, die von einem Wurzelelement gebildet wird, welches Wurzelelement von dem Kenntnisprofil dieses Benutzers gebildet wird, und von einer baumartigen Struktur als zugriffsfähiges System, die für aufeinanderfolgende Funktionsstatusebenen dieser Maschine steht, welche baumartige Struktur als zugriffsfähiges System abhängig ist von dem Kenntnisprofil dieses Benutzers.

3. Vorrichtung nach einem der Ansprüche 1 oder 2, **dadurch gekennzeichnet, dass** die adaptiven Mittel zur Auswahl aufeinanderfolgender Funktionsstatusebenen durch diesen Benutzer umfassen:
- Mittel zum Anzeigen jeder Funktionsstatusebene mittels der visuellen Schnittstellenvorrichtungen, welche Anzeigemittel das Anzeigen jeder Betriebsebene in Form einer zweidimensionalen Zellenmatrix erlauben, wobei jede Zelle einen bestimmten Funktionsstatus dieser Funktionsstatusebene darstellt;
- Mittel zur Aktivierung der Auswahl einer zu dieser zweidimensionalen Zellenmatrix gehörenden Zellenteilmenge in dieser zweidimensionalen Zellenmatrix, wobei diese Zellenteilmenge abhängig von dem Kenntnisstand, den der Benutzer von dieser Maschine hat, bestimmt wird;
- Mittel zur Auswahl einer Zelle dieser Zellenteilmenge durch den Benutzer, was dem Benutzer ermöglicht, den Funktionsstatus auszuwählen, welcher der für die Funktionsstatusebene ausgewählten Zelle entspricht, und den Übergang von dieser Funktionsstatusebene zur folgenden Funktionsstatusebene sicherzustellen.

4. Vorrichtung nach Anspruch 3, **dadurch gekennzeichnet, dass** die Mittel zur Auswahl einer Zelle dieser Zellenteilmenge durch den Benutzer aus einem Mehrrichtungsnavigator bestehen.

5. Vorrichtung nach Anspruch 4, **dadurch gekennzeichnet, dass** der Mehrrichtungsnavigator von einem Berührungsbildschirm gebildet wird, der die Anzeigemittel ausstattet.

6. Vorrichtung nach Anspruch 4, **dadurch gekennzeichnet, dass** der Mehrrichtungsnavigator von Balken mit Neukonfigurierungsfunktion gebildet wird, die mit den Mitteln zur Anzeige und zur Aktivierung der Auswahl gekoppelt sind.

7. Vorrichtung nach Anspruch 4, **dadurch gekennzeichnet, dass** der Mehrrichtungsnavigator von einer manuellen Steuerung in Verbindung mit einer Markierungsvorrichtung für die von den Anzeigemitteln angezeigten Zellen gebildet wird.

8. Vorrichtung nach Anspruch 7, **dadurch gekennzeichnet, dass** der Mehrrichtungsnavigator ferner eine Bestätigungstaste für das Markieren sowie eine Taste zum Verlassen der Funktionsstatusebene umfasst, die den Übergang zur nächsten Funktionsstatusebene erlaubt.

9. Vorrichtung nach Anspruch 7, **dadurch gekennzeichnet, dass** der Mehrrichtungsnavigator von einem Steuerhebel gebildet wird, der mit einem Dehnungsmesser ausgerüstet ist, was eine dynamische Steuerung der Bewegungen des Benutzers auf einer bestimmten Baumebene ermöglicht.

10. Vorrichtung nach einem der Ansprüche 3 bis 9, **dadurch gekennzeichnet, dass** die Mittel zur Aktivierung der Auswahl einer Zellenteilmenge, die zu dieser zweidimensionalen Zellenmatrix gehört, aus der zweidimensionalen Zellenmatrix von einem Zeiger P gebildet werden, die von einem Bereich gebildet wird, der von einem geschlossenen Umriss begrenzt wird, der eine bestimmte Anzahl n; Zellen mit Funktionen einschließt, die der Anzahl von Wahlmöglichkeiten entspricht, die abhängig von dem Kenntnisstand des Benutzers über die Statusmaschine ist.
